# EUROPEAN PATENT APPLICATION

(11) **EP 1 930 700 A2**
(43) Date of publication of application: **11.06.2008**
(21) Application number: 07023473.7
(22) Date of filing: 04.12.2007
(51) Int. Cl.: G01D 11/24

(54) **Magnetic detecting device**

(30) Priority: 08.12.2006 JP 2006331479
(71) Applicant: ALPS ELECTRIC CO., LTD., Tokyo 145-8501 (JP)
(72) Inventor: Kodama, Yuji, Tokyo 145-8501 (JP); Okumura, Hirofumi, Tokyo 145-8501 (JP)
(74) Representative: Klunker . Schmitt-Nilson . Hirsch

(57) **Abstract**

The invention provides a magnetic detecting device having high detection accuracy while preventing deterioration with time to improve durability.

A magnetic detecting device includes: a bracket that is formed of a non-magnetic metal material; a wheel gear that is rotatably supported by the bracket; a magnet that is provided in the wheel gear at a position facing the bracket; and a circuit board that is supported by the bracket and has a magnetic sensor mounted thereon, the magnetic sensor being provided at a position facing the magnet with the bracket interposed therebetween. In the magnetic detecting device, a portion of the bracket is supported by an outer case that is coupled to a device body.

## Description

### CLAIM OF PRIORITY

This application claims benefit of the Japanese Patent Application No. 2006-331479 filed on December 8, 2006, which is hereby incorporated by reference.

### BACKGROUND OF THE INVENTION

### 1. Field of the Invention

The present invention relates to a magnetic detecting device, and more particularly, to a magnetic detecting device capable of accurately detecting, for example, the rotation angle (steering angle) of a steering wheel of a vehicle.

### 2. Description of the Related Art

For example, as an angular sensor for detecting the steering angle of a steering wheel of a vehicle, an angular sensor has been proposed which includes rotating shafts having first and second magnets attached thereto and a substrate having first and second sensing units mounted thereon is coupled to a unit case that is fixed to a lower case for receiving a rotating body (for example, see JP-A-2001-165699).

In such an angular sensor, the position of the first magnet with respect to the first sensing unit and the position of the second magnet with respect to the second sensing unit are determined on the unit case, and the relative positional relationship between each magnet and each sensing unit is established. In this way, before and after the unit case is coupled to the lower case, it is possible to prevent the relative positional relationship between each magnet and each sensing unit from varying, and ensure high detection accuracy of each sensing unit.

However, in the angular sensor according to the related art, the unit case fixed to the lower case for accommodating the rotating body is formed of a synthetic resin, such as PBT, by injection molding. Therefore, when it is required to further improve the detection accuracy of the sensing unit, the positional accuracy of the rotating body may be lowered, or the unit case may be deformed. In addition, there is a limit to improve the detection accuracy.

Further, since the unit case fixed to the lower case for accommodating the rotating body is formed of a synthetic resin, such as PBT, by injection molding, the unit case may be deteriorated with time or due to variation in environments, such as a temperature variation.

### SUMMARY

According to an aspect of the invention, a magnetic detecting device includes: a bracket that is formed of a non-magnetic metal material; a rotating body that is rotatably supported by the bracket; a magnet that is provided in the rotating body at a position facing the bracket; and a circuit board that is supported by the bracket and has a magnetic sensor mounted thereon, the magnetic sensor being provided at a position facing the magnet with the bracket interposed therebetween. In the magnetic detecting device, a portion of the bracket is supported by an outer case that is coupled to a device body.

According to the above-mentioned structure, the rotating body provided with the magnet and the circuit board having the magnetic sensor mounted thereon are supported by the metal bracket formed of a non-magnetic metal material. Therefore, it is possible to maintain high positional accuracy between the magnet and the magnetic sensor, and ensure high detection accuracy of the magnetic sensor. In particular, while the bracket supports the rotating body and the circuit board, a portion of the bracket is supported by the outer case. Therefore, before and after the device is mounted to outer the case, the positional accuracy between the magnet and the magnetic sensor is not lowered. In addition, since the rotating body and the circuit board are supported by the metal bracket, it is possible to prevent the deterioration of the device with time or due to variation in environments, such as a temperature variation, and thus improve the durability of the device.

In the magnetic detecting device according to the above-mentioned aspect, preferably, the bracket includes protruding pieces that protrude in a direction substantially orthogonal to the direction in which the device body is coupled to the outer case, and the protruding pieces are supported by the outer case. According to the above-mentioned structure in which the outer case supports the protruding pieces that protrude in a direction substantially orthogonal to the direction in which the device body is coupled to the outer case, it is possible to maintain high positional accuracy between magnet and the magnetic sensor.

In the magnetic detecting device according to the above-mentioned aspect, preferably, the protruding pieces determine the position of the device body with respect to the outer case. In this case, since the protruding pieces supported by the outer case determine the position of the device, a separate positioning structure is not needed. Thus, it is possible to decrease the number of parts and reduce manufacturing costs.

In the magnetic detecting device according to the above-mentioned aspect, preferably, a predetermined portion of the bracket is bent. In this case, the strength of the bent portion of the bracket is improved, which makes it possible to improve the overall durability of the device body.

In the magnetic detecting device according to the above-mentioned aspect, preferably, the rotating body is a gear that is rotated by a driving force from the outside. In this case, since the magnet is provided in the gear, it is possible to decrease the number of parts and reduce manufacturing costs.

In the magnetic detecting device according to the above-mentioned aspect, preferably, the bracket includes a shaft that is formed of a non-magnetic metal material and rotatably supports the rotating body. In this case, the bracket can support the rotating body without affecting the external magnetic field generated from the magnet.

According to the above-mentioned aspect, the metal bracket supports the rotating body provided with the magnet and the circuit board having the magnetic sensor mounted thereon. Therefore, it is possible to prevent the deterioration of the device with time, thereby improving durability, and ensure high detecting accuracy.

### BRIEF DESCRIPTION OF THE DRAWINGS

Fig. 1 is a diagram illustrating a magnetic detecting device according to an embodiment of the invention coupled to an outer case;
Fig. 2 is a perspective view illustrating the structure of the magnetic detecting device according to the embodiment;
Fig. 3 is a side view illustrating the structure of the magnetic detecting device according to the embodiment;
Fig. 4 is a perspective view illustrating a magnetic sensor of the magnetic detecting device according to the embodiment;
Fig. 5 is a perspective view illustrating the structure of a bracket of the magnetic detecting device according to the embodiment;
Fig. 6 is a perspective view illustrating the structure of the case coupled to the magnetic detecting device according to the embodiment; and
Fig. 7 is a front view illustrating the state of the case coupled to the magnetic detecting device according to the embodiment.

### DESCRIPTION OF THE EMBODIMENTS

Hereinafter, an exemplary embodiment of the invention will be described in detail with reference to the accompanying drawings.

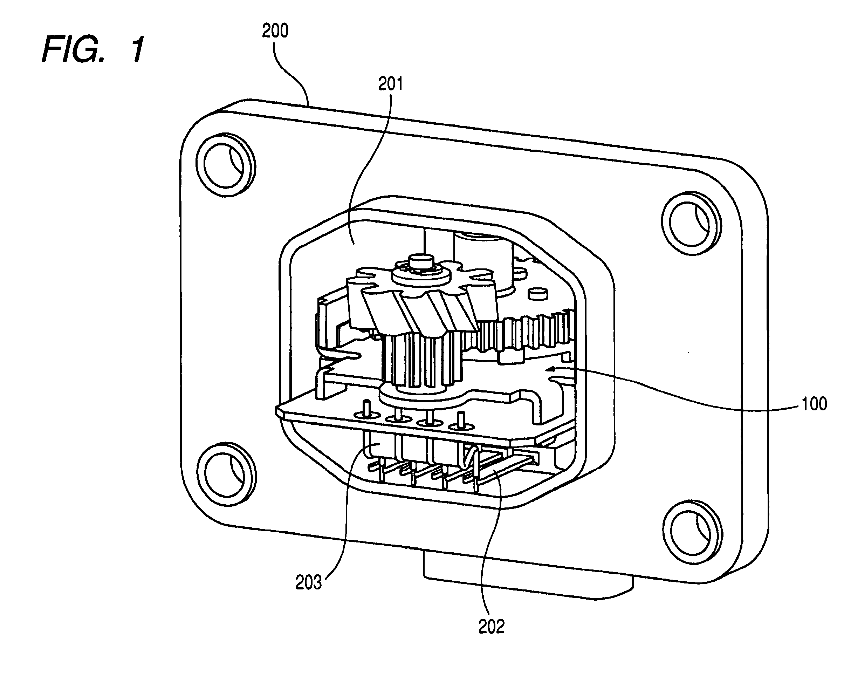

Fig. 1 is a diagram illustrating a magnetic detecting device according to an embodiment of the invention that is coupled to an outer case. The outer case shown in Fig. 1 is just an illustrative example, and the shape and size thereof can be appropriately changed.

As shown in Fig. 1, a magnetic detecting device 100 according to this embodiment is provided in a concave portion 201 of a case 200 formed of an insulating resin material. In Fig. 1, in the concave portion 201, a circuit board of the magnetic detecting device 100 according to this embodiment is connected to terminals 202 of the concave portion 201 provided in the vicinity of the bottom of the concave portion 201 through a flat cable 203. The magnetic detecting device 100 according to this embodiment is held in the case 200 by its own metal bracket, which will be describe in detail below.

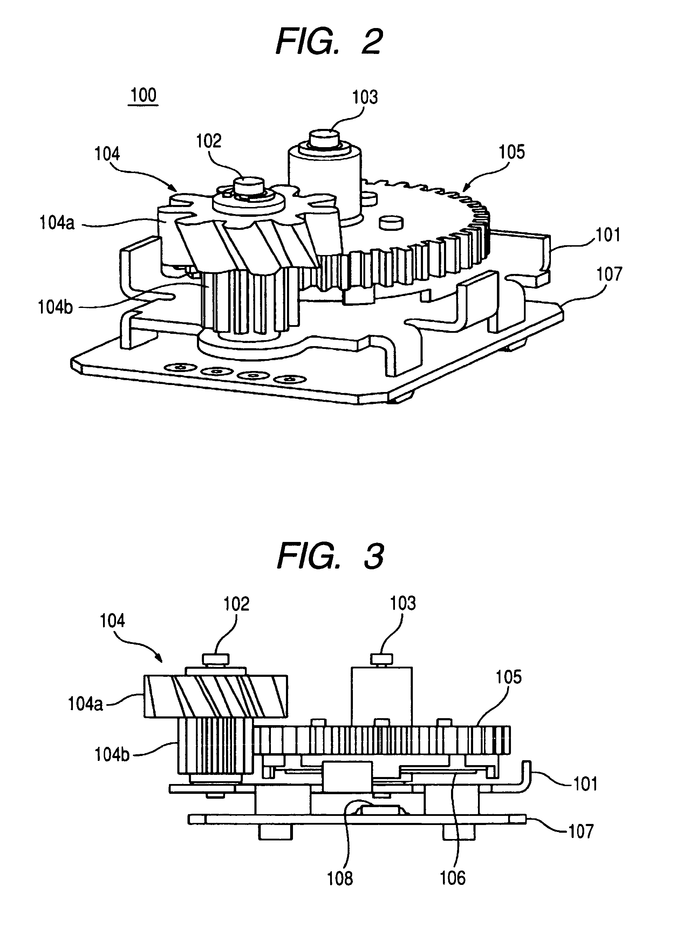

Next, the structure of the magnetic detecting device 100 according to this embodiment will be described with reference to Figs. 2 and 3. Fig. 2 is a perspective view illustrating the structure of the magnetic detecting device 100 according to this embodiment. Fig. 3 is a side view illustrating the structure of the magnetic detecting device 100 according to this embodiment.

As shown in Figs. 2 and 3, the magnetic detecting device 100 according to this embodiment includes a bracket 101 that is formed of a metal plate member made of a non-magnetic material (hereinafter, referred to as a metal plate). For example, the bracket 101 is formed by punching and bending a metal plate formed of a copper alloy of aluminum or brass. The structure of the bracket 101 will be descried below.

Shafts 102 and 103 formed of a non-magnetic metal material are vertically provided on an upper surface of the bracket 101. A reduction gear 104 is rotatably fitted to the shaft 102, and a wheel gear 105, serving as a rotating body, is rotatably fitted to the shaft 103. The reduction gear 104 has a helical gear 104a that is engaged with an external driving gear (not shown) at the upper side of Fig. 2 and a spool gear 104b that is engaged with the wheel gear 105 at the lower side thereof. A magnet 106 is provided in the wheel gear 105 so as to face the upper surface of the bracket 101 at a predetermined gap therebetween (see Fig. 3).

Some portions of the side edges of the bracket 101 are bent downward as shown in Fig. 2. A circuit board 107 is supported by the lower ends of the bent portions. The circuit board 107 is provided below the bracket 101 so as to face the bracket 101 substantially in parallel thereto at a predetermined gap therebetween. As shown in Fig. 3, a magnetic sensor 108 for detecting an external magnetic field generated from the magnet 106 is mounted at a predetermined position of the upper surface of the circuit board 107. The magnetic sensor 108 is provided at a position that faces the magnet 106 with the bracket 101 interposed therebetween.

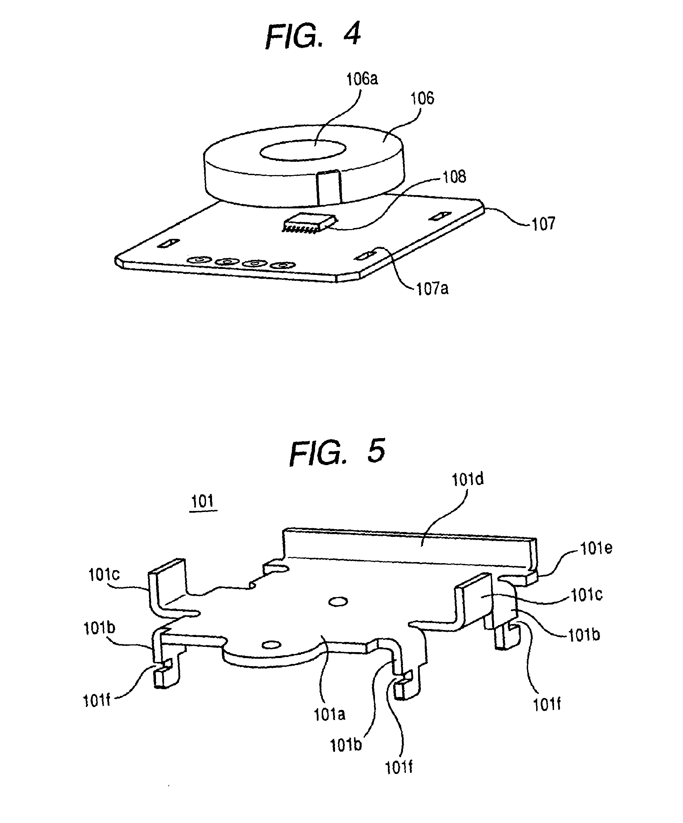

Next, the magnetic sensor 108 of the magnetic detecting device 100 according to this embodiment will be described with reference to Fig. 4. Fig. 4 is a perspective view illustrating the magnetic sensor 108 of the magnetic detecting device 100 according to this embodiment. For clarity of explanation, Fig. 4 shows only the circuit board 107 having the magnet 106 and the magnetic sensor 108 mounted thereon.

As shown in Fig. 4, the magnet 106 has a disk shape, and has a circular opening 106a at the center thereof. The magnetic sensor 108 is mounted on the circuit board 107 at a position corresponding to the lower side of the opening 106a of the magnet 106. The magnetic sensor 108 includes a plurality of GMR (giant magnet resistance) elements that exhibit giant magnetoresistance (for example, 4 GMR elements). Meanwhile, the magnet 106 has N and S poles on its surface that is opposite to the magnetic sensor 108.

In the magnetic sensor 108, magnetoresistive elements detect the external magnetic field generated from the magnet 106. The magnetoresistance of the magnetoresistive element varies in the direction of the external magnetic field generated by the magnet 106, and the magnetic sensor 108 detects the relative movement between the magnetoresistive elements and the magnet 106 on the basis of output signals from the magnetoresistive elements. A control device connected to the magnetic detecting device 100 according to this embodiment can detect the rotation angle of the magnet 106 (wheel gear 105) on the basis of the relative movement detected by the magnetic sensor 108.

Generally, the giant magnetoresistive element (GMR element) that detects a magnetic field and outputs a signal is formed by laminating an exchange bias layer (anti-ferromagnetic layer), a fixed layer (pinned magnetic layer), a non-magnetic layer, and a free layer (free magnetic layer) on a wafer (not shown).

Further, in order for the magnetoresistive element to exhibit giant magnetoresistance (GMR), for example, preferably, the exchange bias layer is formed of an α-Fe₂O₃ layer, the pinned magnetic layer is formed of a NiFe layer, the non-magnetic layer is formed of a Cu layer, and the free magnetic layer is formed of a NiFe layer. However, the invention is not limited thereto. Any type of magnetoresistive element may be used as long as it can exhibit the magnetoresistance. In addition, any laminated structure may be used as long as the magnetoresistive elements can exhibit the magnetoresistance.

Next, the structure of the bracket 101 of the magnetic detecting device 100 according to this embodiment will be described with reference to Fig. 5. Fig. 5 is a perspective view illustrating the structure of the bracket 101 of the magnetic detecting device 100 according to this embodiment.

As shown in Fig. 5, the bracket 101 according to this embodiment is formed by punching a metal plate having a substantially rectangular shape and bending side edges and the rear edge of the metal plate upward and downward as shown in Fig. 5. The bracket 101 having the bent edges makes it possible to improve the overall durability of the device. Further, in this embodiment, punching and bending are sequentially performed to form the bracket 101, but the invention is not limited thereto. Any other processes may be performed to form the bracket 101.

The bracket 101 according to this embodiment includes: a flat portion 101a on which the shafts 102 and 103 for supporting the gears 104 are 105 are vertically provided; a plurality of (in this embodiment, four) support pieces 101b that are bent downward substantially in the vertical direction from the side edges of the flat portion 101a; a pair of protruding pieces 101c that are bent upward substantially in the vertical direction from the side edges of the flat portion 101a; a wall portion 101d that is bent upward substantially in the vertical direction from the rear edge of the flat portion 101a; and engaging pieces 101e that extend from the flat portion 101a to the outside in the vicinities of the wall portion 101d.

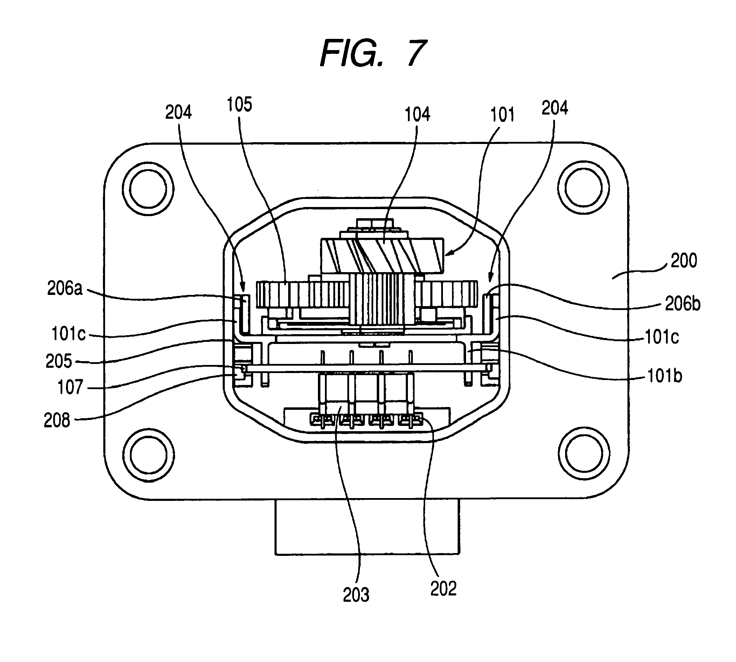

A notch 101f for holding the circuit board 107 is formed in each of the support pieces 101b. The notch 101f is formed in the front edge of each of the support pieces 101b that are disposed at the front side of Fig. 5, and in the rear edge of each of the support pieces 101b that is disposed at the rear side of Fig. 5. In addition, a taper surface is formed at a lower part of the notch 101f. The support pieces 101b are fitted into slotted holes 107a (see Fig. 7) of the circuit board 107, and the lower parts of the notches 101f are bent. In this way, the position of the circuit board 107 with respect to the bracket 101 is determined.

The protruding pieces 101c are formed in substantially L shapes that protrude from the side of the bracket 101 and are then bend upward. The protruding pieces 101c are accommodated in receiving portions, which will be described below, of the case 200. The protruding pieces 101c fix the magnetic detecting device 100 to the case 200 and determine the position of the magnetic detecting device 100. The wall portion 101d is provided to improve the rigidity of the bracket 101 and prevents the movement of the bracket 101. The engaging pieces 101e are engaged with a pair of engaging pieces, which will be described below, of the case 200 to hold a leading end of the bracket 101.

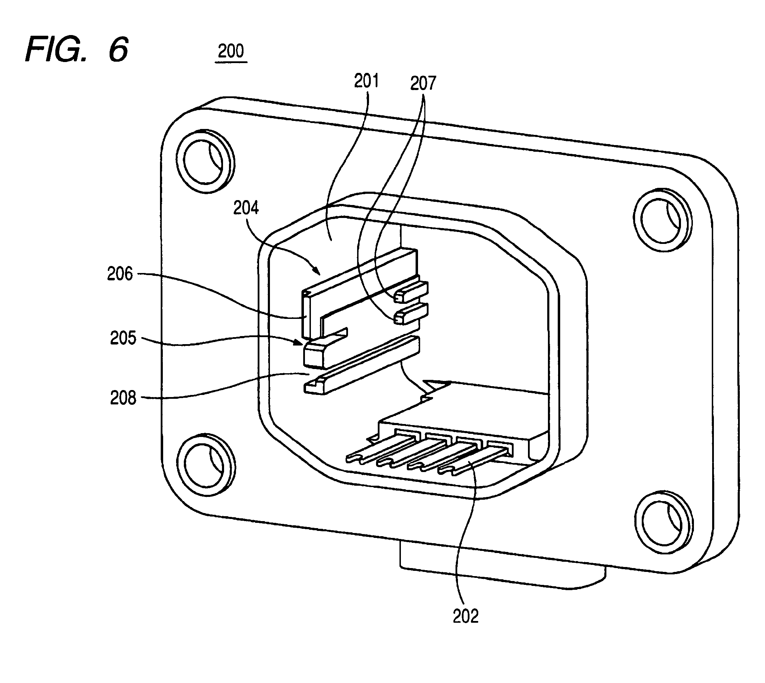

Next, the structure of the case 200 coupled to the magnetic detecting device 100 according to this embodiment will be described with reference to Figs. 6 and 7. Fig. 6 is a perspective view illustrating the structure of the case 200 coupled to the magnetic detecting device 100 according to this embodiment. Fig. 7 is a front view illustrating the structure of the case 200 coupled to the magnetic detecting device 100 according to this embodiment. In Fig. 6, for clarity of explanation, the magnetic detecting device 100 and the flat cable 203 are omitted.

As shown in Figs. 6 and 7, structures 204 for supporting the magnetic detecting device 100 (hereinafter, referred to as 'supporting structures') are provided in the concave portion 201 of the case 200 coupled to the magnetic detecting device 100 according to this embodiment. The supporting structures 204 are formed on both inner walls of the concave portion 201 shown in Fig. 7.

Each of the supporting structures 204 of the case 200 includes: a receiving portion 205 that accommodates the protruding piece 101c of the bracket 101 of the magnetic detecting device 100; a fixing portion 206 that is bent toward the rear side of a vertical portion of the protruding piece 101c by, for example, thermal caulking with the magnetic detecting device 100 fitted to the supporting structures 204; a pair of engaging pieces 207 that are engaged with the engaging pieces 101e of the bracket 101 to support the leading end of the magnetic detecting device 100; and a groove 208 into which the circuit board 107 of the magnetic detecting device 100 is fitted.

As shown in Fig. 6, the receiving portion 205 is formed in a portion of the supporting structure 204. In addition, as shown in Fig. 7, the receiving portion 205 is formed in a shape corresponding to the L-shaped engaging portion 101c of the bracket 101. The fixing portion 206 slightly protrudes from the receiving portion 205 in the forward direction of Fig. 6. As will be described below, a portion of the fixing portion 206 protruding from the receiving portion 205 is bent to the rear side of the protruding piece 101c accommodated in the receiving unit 205 by, for example, thermal caulking. The groove 208 is formed in the supporting structure 204 in the range from the front end to the rear end.

The magnetic detecting device 100 is mounted to the case 200 having the above-mentioned structure from the front side of Fig. 6. In this case, the magnetic detecting device 100 is pushed into the case 200 such that the protruding pieces 101c of the bracket 101 are accommodated into the corresponding receiving portions 205. At that time, the circuit board 107 of the magnetic detecting device 100 is fitted to the grooves 208.

When the magnetic detecting device 100 is pushed into the case 200, the engaging pieces 101e are engaged with the pair of engaging pieces 207. When the magnetic detecting device 100 is further pushed into the case 200, the protruding pieces 101c come into contact with the rear ends of the receiving portions 205. Then, the position of the magnetic detecting device 100 with respect to the case 200 is determined (see Fig. 1). In this case, the wall portion 101d of the bracket 101 does not come into contact with the rear ends of the receiving portions 201, but a predetermined clearance is formed therebetween. The clearance is formed in order to fix the magnetic detecting device 100 at a predetermined position even when the case 200 is expanded or constructed due to, for example, a temperature variation.

After the magnetic detecting device 100 is positioned, the ends of the fixing portions 206 are bent toward the rear sides of the protruding pieces 101c by, for example, thermal caulking. Specifically, the left fixing portion 206a shown in Fig. 7 is bend toward the left side, and the right fixing portion 206b shown in Fig. 7 is bent toward the right side. In this way, the protruding pieces 101c accommodated in the receiving portions 205 are fixed in the case 200.

As described above, according to the magnetic detecting device 100 of this embodiment, the wheel gear 105 provided with the magnet 106 and the circuit board 107 having the magnetic sensor 108 mounted thereon are supported by the metal bracket 101. Therefore, it is possible to maintain high positional accuracy between the magnet 106 and the magnetic sensor 108, and ensure high detection accuracy of the magnetic sensor 108.

In particular, in the magnetic detecting device 100 according to this embodiment, while supporting the wheel gear 105 and the circuit board 107, a portion of the bracket 101 is supported by the case 200. Therefore, before and after the device is mounted to the case 200, the positional accuracy between the magnet 106 and the magnetic sensor 108 is not lowered. In addition, since the wheel gear 105 and the circuit board 107 are supported by the metal bracket 101, it is possible to prevent the deterioration of the device with time or due to variation in environments, such as a temperature variation, and thus improve the durability of the device.

In the magnetic detecting device 100 according to this embodiment, the bracket 101 is provided with the protruding pieces 101c that protrude in a direction substantially orthogonal to the direction in which the device is mounted to the case 200, and the bracket 101 is held in the case 200 by the protruding pieces 101c. According to the structure in which the bracket 101 is held in the case 200 by the protruding pieces 101c that protrude in a direction substantially orthogonal to the direction in which the device is mounted to the case 200, it is possible to improve the positional accuracy between the reduction gear 104 and the case 200.

In particular, in the magnetic detecting device 100 according to this embodiment, the protruding pieces 101c determine the position of the device with respect to the case 200. Therefore, since the protruding pieces 101c supported by the case 200 determine the position of the device, a separate positioning structure is not needed. Thus, it is possible to decrease the number of parts and reduce manufacturing costs.

Further, in the magnetic detecting device 100 according to this embodiment, the shaft 103 formed of a non-magnetic metal material is provided on the bracket 101 so as to rotatably support the wheel gear 105. Therefore, the bracket 101 can support the wheel gear 105 without affecting the external magnetic field generated from the magnet 106.

The invention is not limited to the above-described embodiment, but various modifications and changes of the invention can be made without departing from the scope and spirit of the invention. In this embodiment, the shapes and sizes of the components are not limited to those shown in the accompanying drawings, but the shapes and sizes of the components may be changed within the scope of the invention. In addition, various modifications can be made without departing from the objects of the invention.

In the above-described embodiment, the magnetic detecting device 100 is mounted to the case 200 particularly shown in Fig. 6, but the invention is not limited thereto. For example, the magnetic detecting device 100 may be mounted to the case 200 having different shape and size from the above, as long as the case is provided with the supporting structures 204. That is, as long as the case is provided with the supporting structures 204, the magnetic detecting device 100 can be mounted to various types of cases 200.

Furthermore, in this embodiment, the magnet 106 is provided in the wheel gear 105, but the invention is not limited thereto. For example, a rotating body that is rotated by a gear engaged with the reduction gear 104 may be provided, and the magnet 106 may be provided in the rotating body. However, as in the above-described embodiment, when the magnet 106 is provided in the wheel gear 105, it is possible to decrease the number of parts and reduce manufacturing costs.

## Claims

1. A magnetic detecting device comprising:
a bracket that is formed of a non-magnetic metal material;
a rotating body that is rotatably supported by the bracket;
a magnet that is provided in the rotating body at a position facing the bracket; and
a circuit board that is supported by the bracket and has a magnetic sensor mounted thereon, the magnetic sensor being provided at a position facing the magnet with the bracket interposed therebetween,
wherein a portion of the bracket is supported by an outer case that is coupled to a device body.

2. The magnetic detecting device according to claim 1,
wherein the bracket includes protruding pieces that protrude in a direction substantially orthogonal to the direction in which the device body is coupled to the outer case, and the protruding pieces are supported by the outer case.

3. The magnetic detecting device according to claim 2,
wherein the protruding pieces determine the position of the device body with respect to the outer case.

4. The magnetic detecting device according to any one of claims 1 to 3,
wherein predetermined portions of the bracket is bent.

5. The magnetic detecting device according to any one of claims 1 to 4,
wherein the rotating body is a gear that is rotated by a driving force applied from the outside.

6. The magnetic detecting device according to any one of claims 1 to 5,
wherein the bracket includes a shaft that is formed of a non-magnetic metal material and rotatably supports the rotating body.
